# EUROPEAN PATENT APPLICATION

(11) **EP 3 153 042 A1**
(43) Date of publication of application: **12.04.2017**
(21) Application number: 15425083.1
(22) Date of filing: 08.10.2015
(51) Int. Cl.: A41D 13/00, G06K 7/10, G06K 19/00, G08B 13/24, G06Q 10/08, G06K 17/00, G06K 19/077

(54) **KIT FOR MONITORING PROTECTIVE DEVICES**

(71) Applicant: Cooperativa Edile Appennino Societa' Cooperativa a Responsabilita' Limitata, 40063 Monghidoro (BO) (IT); Di Genova, Francesco, 65015 Montesilvano (Prov. of Pescara) (IT); Pace, Andrea, 60125 Ancona (AN) (IT)
(72) Inventor: SALOMONI, Fabrizio, 40063 Monghidoro (BO) (IT); DI GENOVA, Francesco, 35015 Montesilvano (PE) (IT); PACE, Andrea, 60125 Ancona (IT)
(74) Representative: Modiano, Micaela Nadia

(57) **Abstract**

A kit for monitoring protection devices (1), comprising:
- identification means (2) containing a specific string of data which are associated with at least one provided protection device (3);
- at least one control and management element (4), provided with at least one memory unit (5);
- a user interface, provided with an apparatus for displaying informational messages, controlled by the at least one control and management element (4);
- at least one detection and reading unit (6), controlled by the at least one control and management element (4), for the acquisition of data strings from the identification means (2) to check that the use of the devices (3) is compliant with the applicable standards on the subject.

## Description

The present invention relates to a kit for monitoring protective devices.

Pursuant to the provisions of Legislative Decree no. 81 of 9 April 2008, Unified Text on workplace health and safety, the employer is required to provide workers with equipment compliant with the requirements of the law, suitable for health and safety purposes, adequate for the work to be performed or in any case adapted for the purposes for which they are to be used.

Moreover, the employer must provide workers with the necessary and suitable individual protection devices adequate for the risks to be prevented and for the conditions that occur at the workplace.

A personal protection device, termed PPD, is understood to be any equipment intended to be worn and held by the worker to protect him/her against one or more risks that can threaten his safety or health during work, as well as any complement or accessory intended for this purpose.

In case of multiple risks, it may also be necessary to use simultaneously multiple personal protection devices.

Among the obligations of the employer there is also the obligation to keep the equipment and PPDs efficient and ensure their hygiene conditions by means of necessary maintenance, repairs and replacements.

If these provisions are not met, sanctions affecting the employer and/or the person in charge of the risk protection and prevention service are prescribed.

According to the regulation cited above, workers are required to use the PPDs provided to them.

Control and monitoring of these devices, as well as of their maintenance, is currently performed directly by the assigned personnel, in particular by the person in charge of the risk protection and prevention service.

However, this verification method does not allow to have complete and continuous monitoring of the workplace, such as for example of an industrial building or of a building site. It is in fact not always possible to have the constant presence, at the building site or in the industrial building, and in particular in every area thereof, of personnel assigned to this duty at all work hours of the day.

The aim of the present invention is to solve the problems described above, by devising a kit for monitoring protection devices that allows the employer and the person in charge of the risk protection and prevention service to check that the use of the protection devices complies with the provisions of the applicable laws on the matter. Within this aim, an object of the invention is to provide a kit for monitoring protection devices that allows to check in real time whether the workers are using correctly the safety devices made available to them.

Another object of the invention is to devise a kit for monitoring protection devices that allows to perform promptly on the safety equipment and devices the prescribed maintenance, repairs and replacements.

A further object of the present invention is to provide a kit for monitoring protection devices that has low costs, is relatively simple to provide in practice and is safe in application.

This aim and these and other objects that will become better apparent hereinafter are achieved by a kit for monitoring protection devices, characterized in that it comprises:
- identification means containing a specific string of data which are associated with at least one provided protection device;
- at least one control and management element, provided with at least one memory unit;
- a user interface, provided with an apparatus for displaying informational messages, controlled by the at least one control and management element;
- at least one detection and reading unit, controlled by the at least one control and management element, for the acquisition of data strings from said identification means to check that the use of said devices is compliant with the applicable standards on the subject.

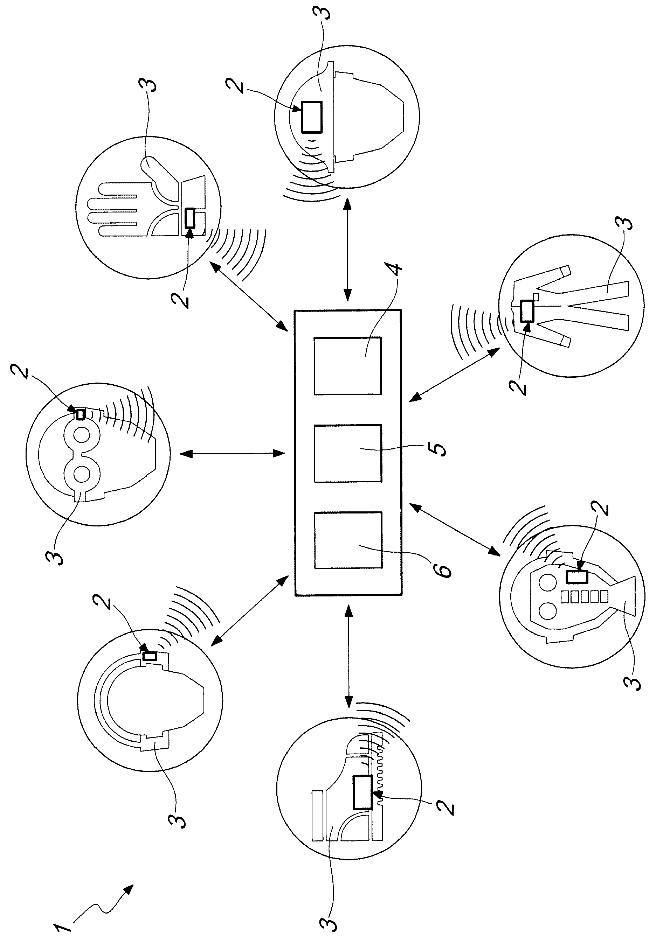

Further characteristics and advantages of the invention will become better apparent from the detailed description of a preferred but not exclusive embodiment of the kit for monitoring protection devices according to the invention, illustrated by way of nonlimiting example in the accompanying drawings, wherein the sole figure shows the kit for monitoring protection devices according to the invention.

With reference to the figure, the numeral 1 generally designates a kit for monitoring protection devices.

According to the invention, the monitoring kit 1 comprises:
- identification means 2, which contain a specific string of data which are associated with at least one provided protection device 3; such string can contain a unique, non-modifiable code written during production at the hardware level.

The identification means 2 can be associated with the devices 3 directly (for example by gluing them and/or fixing them to the surface thereof).

The identification means 2 can therefore be constituted by tags which are adhesive (or in any case fixable to a surface of the devices 3) or, as an alternative, by laminar elements that are comprised in the devices 3.
- at least one control and management element 4, provided with at least one memory unit 5;
- a user interface, provided with an apparatus for displaying informational messages and controlled by the at least one control and management element 4;
- at least one detection and reading unit 6, controlled by the at least one control and management element 4, for the acquisition of strings of data from the identification means 2 in order to check that the use of the devices 3 is compliant with the applicable standards on the matter.

According to a solution that is particularly useful and practical, the protection devices 3 can be of the type of personal protection devices 3.

A personal protection device, termed PPD, is understood to be any equipment intended to be worn and held by the worker to protect him against one or more risks that can threaten his safety or health during work as well as any complement or accessory intended for this purpose.

Ordinary work clothing and uniforms not specifically intended to protect the safety and health of the worker do not constitute PPDs.

PPDs must be used when the risks cannot be avoided or reduced sufficiently by technical prevention measures, by collective protection means, by measures, methods or procedures for work reorganization.

Upon the non-simultaneous detection of the number and type of the protection devices 3 that is preset, the control and management element 4 sends an alarm signal to the user interface.

If this occurs, the control and management element 4, further, automatically logs in real time the detected noncompliance in the memory unit 5.

By using the kit 1 according to the invention, the employer and/or the person in charge of the risk protection and prevention service can monitor easily and constantly whether every worker is using correctly the protection devices 3 required to perform a given task.

More particularly, the identification means 2 containing a specific string of data can be of the type selected preferably among transponders, magnetic media, labels with bar codes, labels with QR codes, magnetic field generators, electric field generators, electromagnetic signal emitters, signal emitters of the type known as Bluetooth®, signal emitters of the type known as NFC, radio frequency signal emitters, and the like.

According to a preferred solution, the identification means 2 can be a signal emitter of the type known as BLE (Bluetooth® Low Energy).

The BLE is a signal emitter with low energy consumption, capable of sending constantly (or at time intervals that can be parameterized) its own location to a detection and reading unit.

Moreover, the detection and reading unit 6 can be of the type selected preferably among radio frequency units, units of the type known as Bluetooth®, units of the type known as NFC, infrared units, photocell units, photodiode units, bar code readers, QR code readers, magnetic strip readers, electrical field detectors, magnetic field detectors, radio frequency receivers and the like.

It is useful to specify that the protection devices 3 can be of the type of extinguishers, helmets, jackets, goggles, protective masks, gloves, noise protection earmuffs, accident prevention shoes, and the like.

It is known that extinguishers are required by law to be subjected to periodic inspections.

The identification means 2, associated with the extinguisher, therefore contains, in the corresponding data string, the date when the inspection must be performed (month and year) and optionally the name of the company that must perform it.

The control and management element 4, with a predefined number of days of advance, with respect to the stored date, therefore sends a warning signal to the user interface in order to notify the imminent deadline to the employer or to the person in charge of the risk protection and prevention service.

Moreover, the control and management element 4 logs automatically and in real time the inspection performed in the memory unit 5, scheduling the following intervention.

The interface module can be of the type selected preferably among a PC, an interactive screen, a portable computer, a tablet, a smartphone and the like.

If the user interface is a tablet, a smartphone and the like, it is sufficient for the user to move the tablet closer to the identification means 2 in order to display on the screen all the associated information.

The control and management element 4 can be associated with a printer to reproduce a written report of the situation.

A plurality of operator profiles can be stored in the memory unit 5 in accordance with the task performed, a predefined number of mandatory personal protection devices 3 being associated with each operator profile.

The employer or the person in charge, after selecting the specific desired profile among the ones stored (which can be fixed for each worker or modified depending on the type of activity being performed, even by the same worker), can, by means of the detection and reading unit 6, scan the work area, identifying the various identification means 2 that are present or are in any case at a detection distance, thus verifying the specific equipment that is present.

If the detected means 2 are different from the provisions of the profile, the control and management element 4 sends one or more alarm signals to the user interface, reporting the anomaly to the user and indicating on the display of the interface which devices 3 do not match.

Through the course of the work day, the detection and reading unit 6 remains constantly active when one of the provided devices 3 is missing.

The control and management element 4 then logs all the detected scans and stores them, signing them digitally and applying a timestamp to them.

This allows to produce documents with an assured date, giving them legal standing.

Both the timestamp and the digital signature in fact give assurance over time that the stored files cannot be modified.

This aspect is particularly advantageous for future prospects.

In fact, should a dispute regarding permanent disability caused by work arise years later, it is possible to determine what really happened by analyzing the scan archive.

In particular, it is possible to check whether the worker always used correctly the mandatory protection devices 3 provided by the employer.

For example, if a worker who performed for years a task that exposed him to loud noises reports permanent disability due to the type of work performed, it is possible to check, by analyzing the scan archive, whether the employer actually did fulfill his duties by providing adequate equipment and devices, and therefore whether he is responsible for what happened, or whether instead the worker complied with his obligations, adopting the required precautions that would have ensured his safety.

The adoption of the kit 1 therefore would entail considerable tax relief for the employer and a reduction of costs linked to workplace safety management.

Advantageously, the kit for monitoring protection devices 1 allows the employer and the person in charge of the risk protection and prevention service to check whether use of the protection devices 3 is compliant with the provisions of the applicable standards on the matter.

Conveniently, the monitoring kit 1 according to the invention allows to check in real time whether the workers are using correctly the protective devices 3 made available to them.

Usefully, the kit for monitoring protection devices 1 allows to perform in a timely manner on the protection equipment and devices 3 the provided maintenance, repairs and replacements.

The invention thus conceived is susceptible of numerous modifications and variations, all of which are within the scope of the appended claims; all the details may further be replaced with other technically equivalent elements.

According to an embodiment that is of great practical interest and is safe and simple to provide, each worker can have, on his own smartphone (or on other devices that can be interfaced with the control and management element 4 available to the Person in Charge of the Safety and Prevention Service), an application with which to change his profile to the type of activity that he expects to perform. This possibility ensures that the Person in Charge of the Safety and Prevention Service monitors the correct use of the necessary safety devices of each worker in an optimum manner (since the worker himself declares the profile that corresponds at that moment to the activity that he is performing).

In the exemplary embodiments that follow, individual characteristics, given in relation to specific examples, may actually be interchanged with other different characteristics that exist in other exemplary embodiments.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A kit for monitoring protection devices, **characterized in that** it comprises:
- identification means (2) containing a specific string of data which are associated with at least one provided protection device (3);
- at least one control and management element (4), provided with at least one memory unit (5);
- a user interface, provided with an apparatus for displaying informational messages, controlled by the at least one control and management element (4);
- at least one detection and reading unit (6), controlled by the at least one control and management element (4), for the acquisition of data strings from said identification means (2) to check that the use of said devices (3) is compliant with the applicable standards on the subject.

2. The monitoring kit according to claim 1, **characterized in that** said protection devices (3) are of the type of personal protection devices, upon the non-simultaneous detection of the preset number and type of protection devices (3) said control and management element (4) sending an alarm signal to the user interface and recording the detected noncompliance in the memory unit 5.

3. The monitoring kit according to claim 1, **characterized in that** said identification means (2) containing a specific string of data are of the type selected preferably among transponders, magnetic media, labels with bar codes, labels with QR codes, magnetic field generators, electric field generators, electromagnetic signal emitters, signal emitters of the type known as Bluetooth®, signal emitters of the type known as NFC, radio frequency signal emitters, and the like.

4. The monitoring kit according to claim 3, **characterized in that** said identification means (2) are a signal emitter of the type known as BLE (Bluetooth® Low Energy).

5. The monitoring kit according to claim 1, **characterized in that** said remote detection and reading unit (6) is of the type selected preferably among radio frequency units, units of the type known as Bluetooth®, units of the type known as NFC, infrared units, photocell units, photodiode units, bar code readers, QR code readers, magnetic strip readers, electric field detectors, magnetic field detectors, radio frequency receivers, and the like.

6. The monitoring kit according to one or more of the preceding claims, **characterized in that** said at least one protection device (3) can be of the type of an extinguisher, a helmet, a jacket, goggles, protective mask, gloves, noise protection earmuffs, safety shoes and the like.

7. The monitoring kit according to one or more of the preceding claims, **characterized in that** said interface module (6) is of the type selected preferably among a PC, an interactive screen, a portable computer, a tablet, a smartphone and the like.

8. The monitoring kit according to one or more of the preceding claims, **characterized in that** said control and management element (4) is associated with a printer for reproducing a written report of the situation.

9. The monitoring kit according to one or more of the preceding claims, **characterized in that** said memory unit (5) stores a plurality of operator profiles in accordance with the task performed, a predefined number of mandatory personal protection devices (3) being associated with each operator profile.

10. The monitoring kit according to one or more of the preceding claims, **characterized in that** said memory unit (5) stores all the detections made, comprising a digital signature and a timestamp.
